# EUROPEAN PATENT SPECIFICATION

(11) **EP 4 147 951 B1**
(45) Date of publication and mention of the grant of the patent: **08.01.2025**
(21) Application number: 22170601.3
(22) Date of filing: 28.04.2022
(51) Int. Cl.: B62D 25/10, B62J 17/04

(54) **A STRADDLED VEHICLE WITH A VEHICLE EXTERIOR PART**
SATTELFAHRZEUG MIT FAHRZEUGAUSSENTEIL
VÉHICULE À SELLE AVEC PIÈCE EXTÉRIEURE DE VÉHICULE

(30) Priority: 01.09.2021 JP 2021142532
(43) Date of publication of application: 15.03.2023
(73) Proprietor: Yamaha Hatsudoki Kabushiki Kaisha, Iwata-shi, Shizuoka-ken 438-8501 (JP)
(72) Inventor: MIZUTANI, Shohei, Iwata-shi, 438-8501 (JP); TAKARA, Koji, Iwata-shi, 438-8501 (JP); NAKAMURA, Takuya, Iwata-shi, 438-8501 (JP)
(74) Representative: Studio Torta S.p.A.

(56) References cited:
- EP-A1- 2 489 581
- WO-A1-2018/217215
- JP-A- H08 207 855
- US-A1- 2009 141 377
- US-B1- 6 398 683

## Description

The present invention relates to a vehicle exterior part made primarily of resin, a straddled vehicle, and a method for manufacturing a vehicle exterior part.

Conventionally, resin-made exterior parts are often used in straddled vehicles. For example, Japanese Laid-Open Patent Publication No. 2012-61953 discloses a windscreen that covers an upper front portion of a vehicle body. Such a windscreen is often made of resin. The windscreen is fixed to a metal bracket with bolts and nuts. The windscreen is supported by the vehicle frame with the bracket therebetween. When the vehicle is running, the windscreen is subjected to wind pressure. The part of the windscreen fixed to the bracket needs to be sufficiently rigid. While the windscreen is an example exterior part of a straddled vehicle, but the windscreen is not the only plastic exterior part that needs rigidity.

Document US6398683B1 shows the preamble of claim 1.

In order to increase the rigidity of a resin-made exterior part, a reinforcement plate may be insert-molded into the resin-made body. If a reinforcement plate is provided on one side of the body, the reinforcement plate is likely to peel off the body. Therefore, the reinforcement plate is preferably embedded in the body. That is, both of the front surface and the reverse surface of at least a portion of the reinforcement plate are preferably covered by the body.

However, when both of the front surface and the reverse surface of the reinforcement plate are covered by the body, the resin material needs to be supplied to the front surface and the reverse surface of the reinforcement plate in the mold during insert molding. Therefore, when the reinforcement plate is set in the mold, the front surface and the reverse surface of the reinforcement plate need to be separated from the mold surface, and a space needs to be created between the front surface of the reinforcement plate and the mold surface and between the reverse surface of the reinforcement plate and the mold surface. In this case, the front surface or the reverse surface of the reinforcement plate cannot be sufficiently supported by the surface of the mold, and it is not always easy to set the reinforcement plate at an accurate position. The position of the reinforcement plate may possibly shift relative to the resin-made body. However, if the position of the reinforcement plate shifts, there will be an error from the design value of the rigidity of the exterior part.

It is an object of the present invention is to provide a vehicle exterior part made primarily of resin, in which the rigidity thereof is increased by insertion of a reinforcement plate, and in which the position of the reinforcement plate is unlikely to shift.

A vehicle exterior part disclosed herein includes a resin-made body, and a reinforcement plate that is at least partially embedded in the body. The reinforcement plate has a front surface and a reverse surface. The body is formed with a first hole and a second hole. The reinforcement plate is formed with a first through hole aligned with the first hole and a second through hole aligned with the second hole. An inner diameter of the first through hole is less than or equal to an inner diameter of the first hole, and an inner diameter of the second through hole is less than or equal to an inner diameter of the second hole. The body includes a first portion that covers a front surface and a reverse surface of the reinforcement plate around the first through hole, and a second portion that covers the front surface and the reverse surface of the reinforcement plate around the second through hole.

With the vehicle exterior part described above, although the body is made of resin, it is possible to increase the rigidity because the reinforcement plate is embedded in the body. Since at least the first portion and the second portion of the body cover both of the front surface and the reverse surface of a portion of the reinforcement plate, the reinforcement plate is unlikely to peel off the body. With the vehicle exterior part described above, for example, by providing a mold with a first protrusion and a second protrusion and by fitting the first protrusion into the first through hole and the second protrusion into the second through hole, it is possible to set the reinforcement plate so that the front surface and the reverse surface are spaced apart from the mold. Since the positions of the first through hole and the second through hole are aligned with the first protrusion and the second protrusion, it is possible to accurately position the reinforcement plate relative to the mold. Since the first protrusion and the second protrusion are engaged with the first through hole and the second through hole, the position of the reinforcement plate is unlikely to shift when a resin material is injected into the mold. Therefore, the position of the reinforcement plate is unlikely to shift relative to the body. With the vehicle exterior part described above, there will be little error from the design value of the rigidity.

An inner diameter of the first through hole may be smaller than an inner diameter of the first hole. An inner diameter of the second through hole may be smaller than an inner diameter of the second hole. The reinforcement plate may include a first exposed portion that is a portion around the first through hole and is not covered by the body, and a second exposed portion that is a portion around the second through hole and is not covered by the body. The first portion of the body may cover the front surface and the reverse surface of the reinforcement plate around the first exposed portion. The second portion of the body may cover the front surface and the reverse surface of the reinforcement plate around the second exposed portion.

Thus, a fastener such as a bolt can be pressed against the first exposed portion and the second exposed portion of the reinforcement plate. The first through hole and the second through hole of the reinforcement plate can suitably be used as holes for fastening the vehicle exterior part to another vehicle part by bolts, or the like. Since the reinforcement plate serves also as a fastening member, it is possible to reduce the number of components and the cost.

The first hole and/or the second hole may be a through hole.

The first through hole and/or the second through hole may have a circular shape.

The reinforcement plate may be formed of metal.

A portion of the body around the first hole may be depressed in a center line direction of the first through hole. A portion of the body around the second hole may be depressed in a center line direction of the second through hole.

Thus, it is possible to increase the rigidity of the portion of the body around the first hole and/or the portion of the body around the second hole.

A straddled vehicle disclosed herein includes the vehicle exterior part described above.

The straddled vehicle may include: a vehicle frame including a head pipe; and a bracket supported on the vehicle frame. The vehicle exterior part may be a front cowl that is arranged at least partially forward of the head pipe. The front cowl may be fastened to the bracket by a bolt inserted through the first through hole and a bolt inserted through the second through hole. A windscreen may be attached to the front cowl.

A method for manufacturing a vehicle exterior part disclosed herein includes: a setting step of setting a reinforcement plate, which has been formed with a first through hole and a second through hole, in a space between a first mold and a second mold; an injection step of injecting a resin material into the space; a curing step of curing the resin material; and a take-out step of moving the second mold relative to the first mold in a first direction away from the first mold so as to take out the cured resin material with the reinforcement plate embedded therein from the first mold and the second mold. The first mold includes a first protrusion and a second protrusion that protrude in the first direction. In the setting step, the first protrusion and the second protrusion of the first mold are fitted into the first through hole and the second through hole of the reinforcement plate so as to hold the reinforcement plate by the first protrusion and the second protrusion so that a portion of the reinforcement plate around the first through hole and a portion of the reinforcement plate around the second through hole are separated from a surface of the first mold and a surface of the second mold.

With the manufacturing method described above, the reinforcement plate can be set so that the front surface and the reverse surface of a portion around the first through hole are separated from the surface of the first mold and the surface of the second mold, and the front surface and the reverse surface of a portion around the second through hole are separated from the surface of the first mold and the surface of the second mold. Since the positions of the first through hole and the second through hole can be aligned with the positions of the first protrusion and the second protrusion, the reinforcement plate can be accurately positioned relative to the first mold and the second mold. Since the first protrusion and the second protrusion are engaged with the first through hole and the second through hole, the position of the reinforcement plate is unlikely to shift when a resin material is injected. Therefore, the position of the reinforcement plate is unlikely to shift relative to the body. Therefore, the insertion of the reinforcement plate increases the rigidity, and it is possible to realize a vehicle exterior part in which the position of the reinforcement plate is unlikely to shift.

An ejector pin extending in the first direction may be inserted into the first mold so that the ejector pin can slide in the first direction. In the take-out step, the resin material may be taken out of the first mold by pushing the resin material in the first direction by the ejector pin.

With the method described above, it is possible with the ejector pin to easily take out the resin material with the reinforcement plate embedded therein. Since the direction in which the ejector pin extends and the direction in which the first protrusion and the second protrusion of the first mold extend are both the first direction, when moving the second mold in the first direction relative to the first mold, it is possible to smoothly push the resin material by the ejector pin.

According to the present invention, it is possible to provide a vehicle exterior part made primarily of resin, in which the rigidity thereof is increased by insertion of a reinforcement plate, and in which the position of the reinforcement plate is unlikely to shift.

### BRIEF DESCRIPTION OF THE DRAWINGS

FIG. **1** is a side view of a motorcycle according to an embodiment.
FIG. **2** is a perspective view of a bracket.
FIG. **3** is a perspective view of a bracket, a front cowl and a windscreen.
FIG. **4** is a front view of a front cowl.
FIG. **5** is a back view of a front cowl.
FIG. **6** is a front view of a reinforcement plate.
FIG. **7** is a cross-sectional view taken along line VII-VII of FIG. **3****.**
FIG. **8** is a cross-sectional view taken along line VIII-VIII of FIG. **3****.**
FIG. **9** is a flow chart showing an example of a method for manufacturing a front cowl.
FIG. **10** is a partial cross-sectional view of a mold in which a reinforcement plate is set.
FIG. **11** is a partial cross-sectional view of a mold and a front cowl, schematically showing a state where the mold is opened.
FIG. **12** is a partial cross-sectional view of a front cowl according to an alternative embodiment.
FIG. **13** is a partial cross-sectional view of a mold in which a reinforcement plate is set, illustrating an alternative embodiment.
FIG. **14** is a partial cross-sectional view of a front cowl according to an alternative embodiment.
FIG. **15** is a partial cross-sectional view of a mold in which a reinforcement plate is set, illustrating an alternative embodiment.

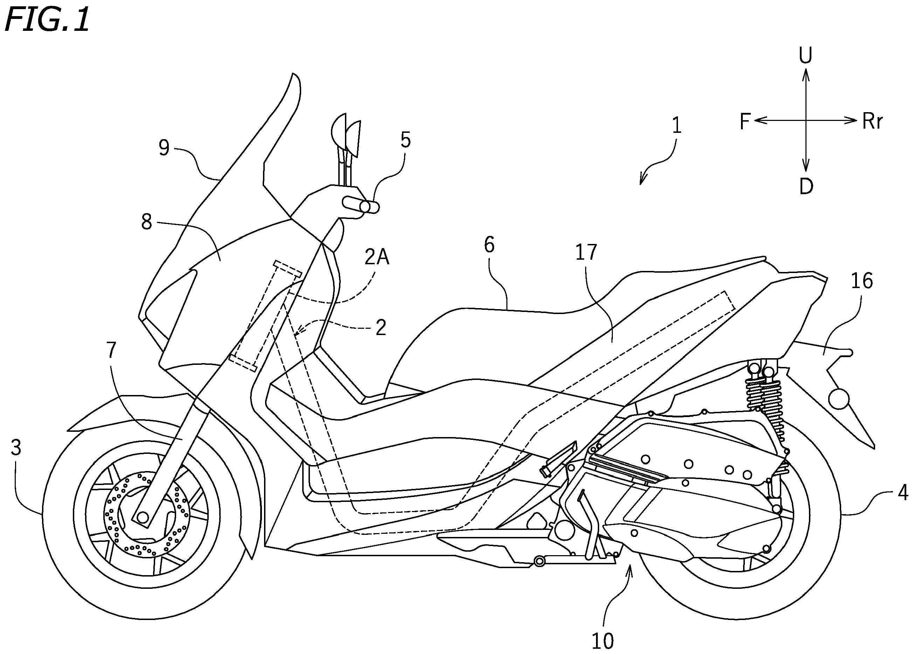

An embodiment will now be described with reference to the drawings. FIG. **1** is a side view of a motorcycle **1,** which is an example of the straddled vehicle. The motorcycle **1** according to the present embodiment is a scooter. Note however that there is no particular limitation on the type of the motorcycle **1.**

The terms front, rear, left, right, up and down, as used in the description below, refer to these directions as seen from a virtual rider (not shown) seated on the seat **6** while the motorcycle **1** is standing upright on a horizontal surface with no rider and no load thereon, unless specified otherwise. The designations F, Rr, L, R, U and D, as used in the figures, refer to front, rear, left, right, up and down, respectively.

The motorcycle **1** includes a vehicle frame **2** having a head pipe **2A,** a seat **6** supported on the vehicle frame **2,** an internal combustion engine **10** pivotably supported on the vehicle frame **2,** a handlebar **5** fixed to a steering shaft (not shown) inserted in the head pipe **2A,** a front fork **7** fixed to the steering shaft, a front wheel **3** supported on the front fork **7,** and a rear wheel **4** driven by the internal combustion engine **10.** The motorcycle **1** includes a side cover **17,** and a rear fender **16** that is arranged at least partially upward of the rear wheel **4.**

The motorcycle **1** includes a front cowl **8** that is arranged at least partially forward of the head pipe **2A,** and a windscreen **9** attached to the front cowl **8.** The front cowl **8** is an example of the vehicle exterior part made primarily of resin.

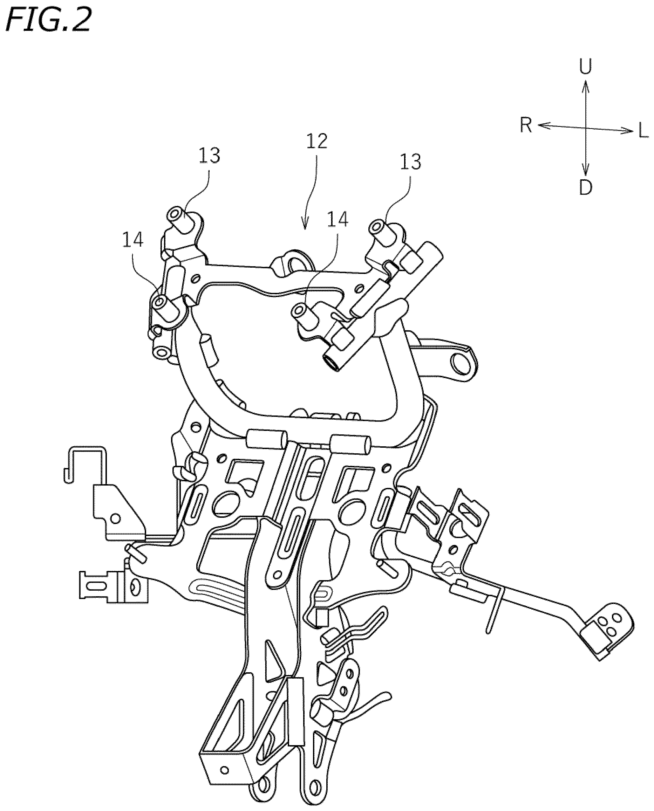

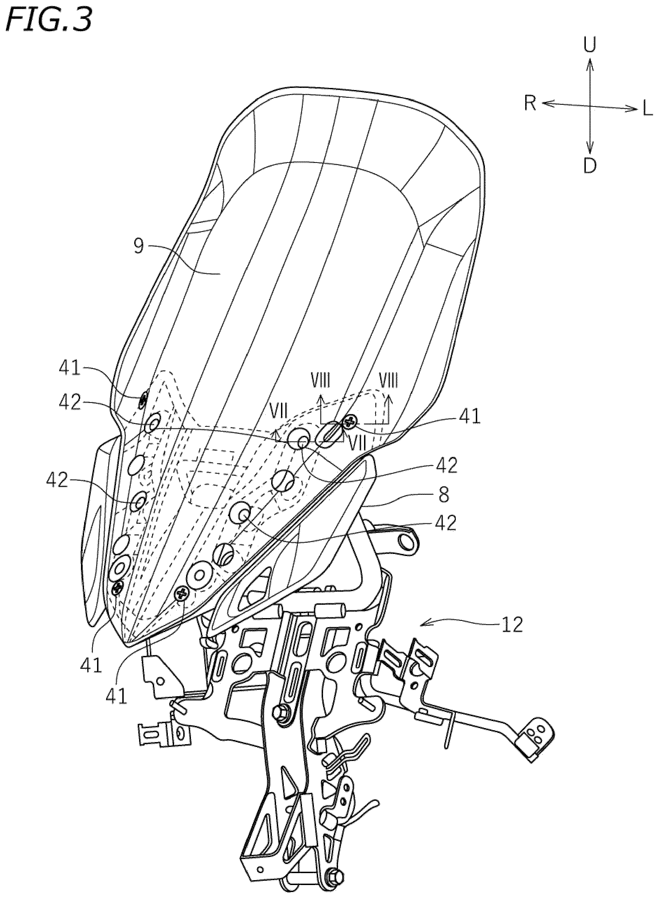

Although not shown in FIG. **1****,** a bracket **12** is fixed to the vehicle frame **2.** FIG. **2** is a perspective view of the bracket **12.** FIG. **3** is a perspective view of the bracket **12,** the front cowl **8** and the windscreen **9.** The front cowl **8** and the windscreen **9** are supported on the bracket **12.**

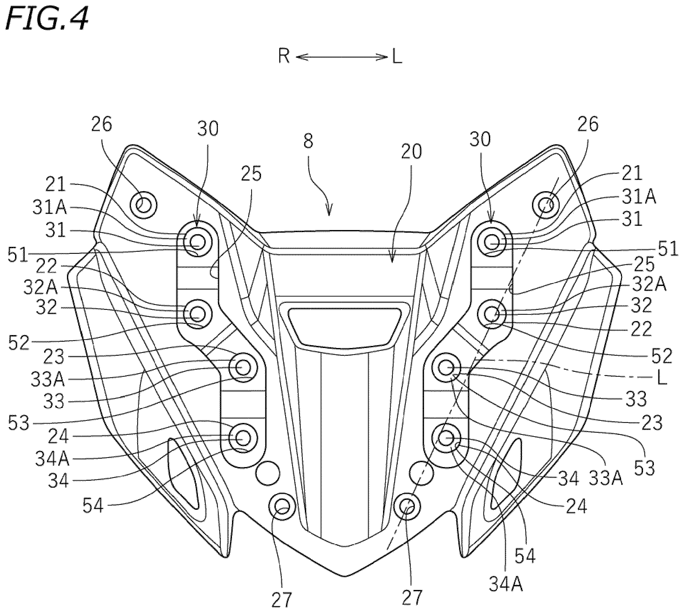

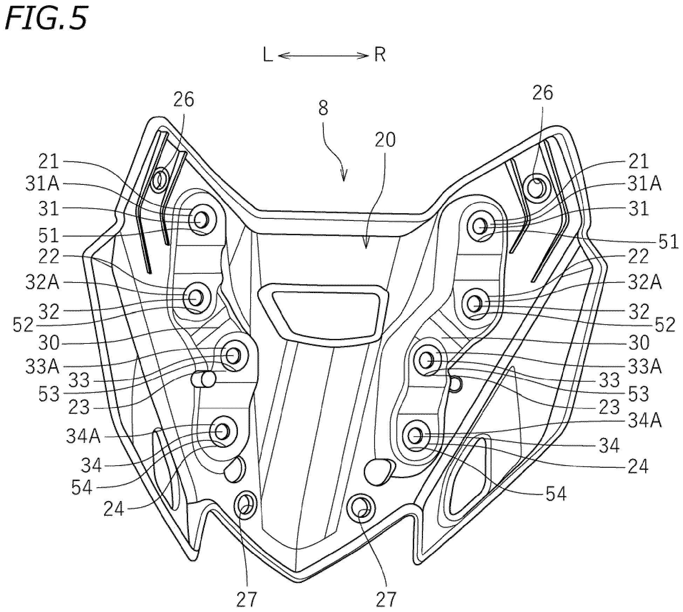

FIG. **4** is a front view of the front cowl **8.** FIG. **5** is a back view of the front cowl **8.** The front cowl **8** includes a resin-made body **20,** and left and right reinforcement plates **30** that are at least partially embedded in the body **20.**

Although there is no particular limitation on the material of the body **20,** a resin of a relatively low rigidity may be used. Here, the material of the body **20** is PP (polypropylene). The material of the body **20** may be nylon. Various resin materials known in the art may be used as the material of the body **20.** The main body **20** is formed with left and right grooves **25.** The groove **25** is depressed from the front side toward the reverse side. In other words, the groove **25** is depressed toward the rear side. The groove **25** extends downward. While the groove **25** may extend straight as viewed from the front side, it is formed here in a partially bent shape. Note however that there is no particular limitation on the shape of the groove **25.**

Formed inside each groove **25** are a first hole **21,** a second hole **22,** a third hole **23** and a fourth hole **24.** Although the first hole **21,** the second hole **22,** the third hole **23** and the fourth hole **24** may be non-through holes, they are through holes in the present embodiment. Although there is no particular limitation on the shape of the first hole **21,** the second hole **22,** the third hole **23** and the fourth hole **24,** the shape is a circular shape in the present embodiment.

The body **20** is formed with left and right fastening holes **26** and left and right fastening holes **27.** The fastening holes**26** is formed at least partially upward relative to the groove **25.** The fastening hole **27** is formed at least partially downward relative to the groove **25.** As shown in FIG. **3****,** screws **41** for fastening the windscreen **9** to the front cowl **8** are inserted through the fastening holes **26** and the fastening holes **27.**

The reinforcement plate **30** is formed of a material whose rigidity is higher than the body **20.** In the present embodiment, the material of the reinforcement plate **30** is metal. For example, the material of the reinforcement plate **30** may be iron, stainless or aluminum. There is no particular limitation on the type of metal. The material of the reinforcement plate **30** is not limited to metal. For example, the material of the reinforcement plate **30** may be a resin whose rigidity is higher than the material of the body **20.**

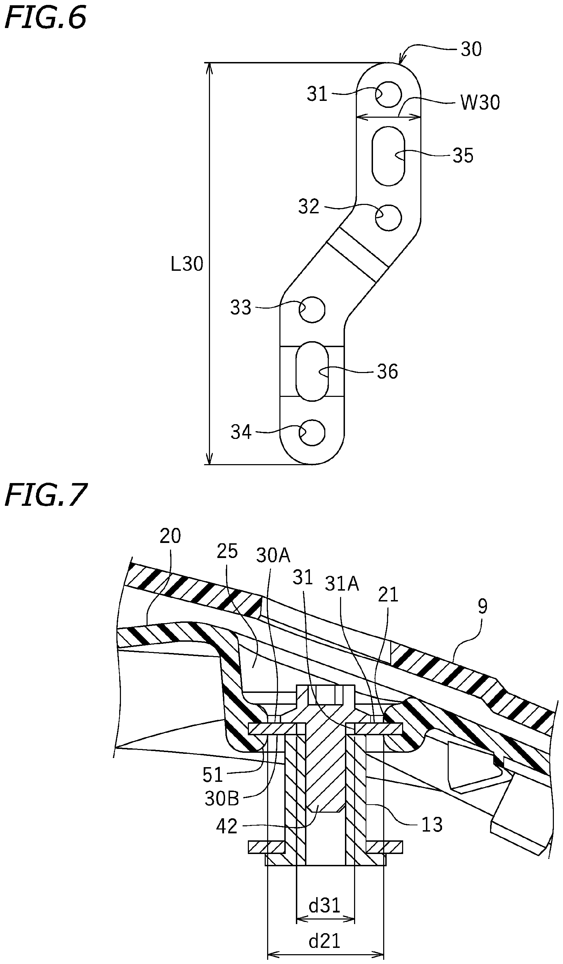

FIG. **6** is a front view of the left reinforcement plate **30.** Note that the right reinforcement plate **30** has a shape that is in left-right symmetry with the left reinforcement plate **30.** Although the reinforcement plate **30** may be formed in a flat plate shape, it may be formed in a bent plate shape in the present embodiment. The reinforcement plate **30** is formed in a relatively elongated shape. The ratio L30/W30 of the length L30 with respect to the width W30 of the reinforcement plate **30** is relatively large. Although there is no particular limitation on the value of the ratio L30/W30, it may be 4 or more, 5 or more, or 6 or more, for example.

The reinforcement plate **30** is formed with a first through hole **31,** a second through hole **32,** a third through hole **33** and a fourth through hole **34.** Although there is no particular limitation on the shape of the first through hole **31,** the second through hole **32,** the third through hole **33** and the fourth through hole **34,** the shape is a circular shape in the present embodiment. Although the inner diameters of the first through hole **31,** the second through hole **32,** the third through hole **33** and the fourth through hole **34** may be different from each other, they are here equal to each other.

The reinforcement plate **30** is formed with other through holes **35** and **36.** The formation of the other through holes **35** and **36** reduces the weight of the reinforcement plate **30.** Note however that one or both of the through hole **35** and the through hole **36** may be optional. The reinforcement plate **30** may be formed with other through holes other than the through holes **35** and **36.**

As shown in FIG. **4****,** the reinforcement plate **30** is arranged downward of the fastening hole **26** and upward of the fastening hole **27.** The reinforcement plate **30** is arranged partially on the straight line **L** that connects between the center of the fastening hole **26** and the center of the fastening hole **27.** With the front cowl **8** according to the present embodiment, the portion between the upper fastening hole **26** and the lower fastening hole **27** is reinforced by the reinforcement plate **30.**

FIG. **7** is a cross-sectional view taken along line VII-VII of FIG. **3****.** As shown in FIG. **7****,** the first through hole **31** of the reinforcement plate **30** is aligned with the first hole **21** of the body **20.** Similarly, the second through hole **32** is aligned with the second hole **22,** the third through hole **33** to the third hole **23,** and the fourth through hole **34** to the fourth hole **24** (see FIG. **4**)**.**

As shown in FIG. **7****,** the portion of the reinforcement plate **30** around the first through hole **31** is embedded in the body **20.** The body **20** includes a first portion **51** that covers a front surface **30A** and a reverse surface **30B** of the reinforcement plate **30** around the first through hole **31.** Although the first portion **51** may cover only a portion of the circumference of the first through hole **31** of the reinforcement plate **30,** the first portion **51** herein covers the entire circumference of the first through hole **31.** Similarly, the body **20** includes a second portion **52,** a third portion **53** and a fourth portion **54** that cover the front surface **30A** and the reverse surface **30B** of the reinforcement plate **30** around the second through hole **32,** the third through hole **33** and the fourth through hole **34,** respectively (see FIG. **4****).** The second portion **52,** the third portion **53** and the fourth portion **54** cover the entire circumferences of the second through hole **32,** the third through hole **33** and the fourth through hole **34,** respectively. Note however that the second portion **52** may only cover a portion of the circumference of the second through hole **32,** the third portion **53** may only cover a portion of the circumference of the third through hole **33,** and the fourth portion **54** may only cover a portion of the circumference of the fourth through hole **34.**

The inner diameter **d31** of the first through hole **31** is less than or equal to the inner diameter **d21** of the first hole **21.** Similarly, the inner diameter of the second through hole **32** is less than or equal to the inner diameter of the second hole **22,** the inner diameter of the third through hole **33** is less than or equal to the inner diameter of the third hole **23,** and the inner diameter of the fourth through hole **34** is less than or equal to the inner diameter of the fourth hole **24.** Here, the inner diameter **d31** of the first through hole **31** is smaller than the inner diameter **d21** of the first hole **21.** D31 <d21. Similarly, the inner diameter of the second through hole **32** is smaller than the inner diameter of the second hole **22,** the inner diameter of the third through hole **33** is smaller than the inner diameter of the third hole **23,** and the inner diameter of the fourth through hole **34** is smaller than the inner diameter of the fourth hole **24.**

The reinforcement plate **30** includes a first exposed portion **31A** that is a portion around the first through hole **31** and is not covered by the body **20.** The first portion **51** of the body **20** covers the front surface **30A** and the reverse surface **30B** of the reinforcement plate **30** around the first exposed portion **31A.** Similarly, the reinforcement plate **30** includes a second exposed portion **32A** that is a portion around the second through hole **32** and is not covered by the body **20** (see FIG. **4**). The reinforcement plate **30** includes a third exposed portion **33A** that is a portion around the third through hole **33** and is not covered by the body **20.** The reinforcement plate **30** includes a fourth exposed portion **34A** that is a portion around the fourth through hole **34** and is not covered by the body **20.** The second portion **52** of the body covers the front surface **30A** and the reverse surface **30B** of the reinforcement plate **30** around the second exposed portion **32A.** The third portion **53** of the body covers the front surface **30A** and the reverse surface **30B** of the reinforcement plate **30** around the third exposed portion **33A.** The fourth portion **54** of the body covers the front surface **30A** and the reverse surface **30B** of the reinforcement plate **30** around the fourth exposed portion **34A.**

As described above, the first hole **21,** the second hole **22,** the third hole **23** and the fourth hole **24** of the body **20** are formed inside the groove **25.** In FIG. 7, a portion of the body **20** around the first hole **21** is depressed downward. A portion of the body **20** around the first hole **21** is depressed in the center line direction of the first through hole **31.** Similarly, a portion of the body **20** around the second hole **22** is depressed in the center line direction of the second through hole **32.** A portion of the body **20** around the third hole **23** is depressed in the center line direction of the third through hole **33.** A portion of the body **20** around the fourth hole **24** is depressed in the center line direction of the fourth through hole **34.**

The front cowl **8** is fastened to the bracket **12** by bolts **42.** As shown in FIG. **2****,** the bracket **12** includes left and right first bosses **13** and left and right second bosses **14.** The front cowl **8** is fastened to the first bosses **13** and the second bosses **14** by the bolts **42.** The front cowl **8** is supported on the vehicle frame **2** with the bracket **12** therebetween.

The front cowl **8** can take two positions, i.e., the first position and the second position, with respect to the bracket **12.** When positioning the front cowl **8** in the first position, the bolt **42** is fastened to the first through hole **31** and the first boss **13** (see FIG. **7****),** and the bolt **42** is fastened to the third through hole **33** and the second boss **14.** Thus, the front cowl **8** is attached to the bracket **12** at a relatively low position (see FIG. **3**). When positioning the front cowl **8** in the second position, the bolt **42** is fastened to the second through hole **32** and the first boss **13,** and the bolt **42** is fastened to the fourth through hole **34** and the second boss **14.** Thus, the front cowl **8** is attached to the bracket **12** at a relatively high position.

Thus, the first through hole **31,** the second through hole **32,** the third through hole **33** and the fourth through hole **34** of the reinforcement plate **30** are used as fastening holes for fastening the front cowl **8** to the bracket **12.**

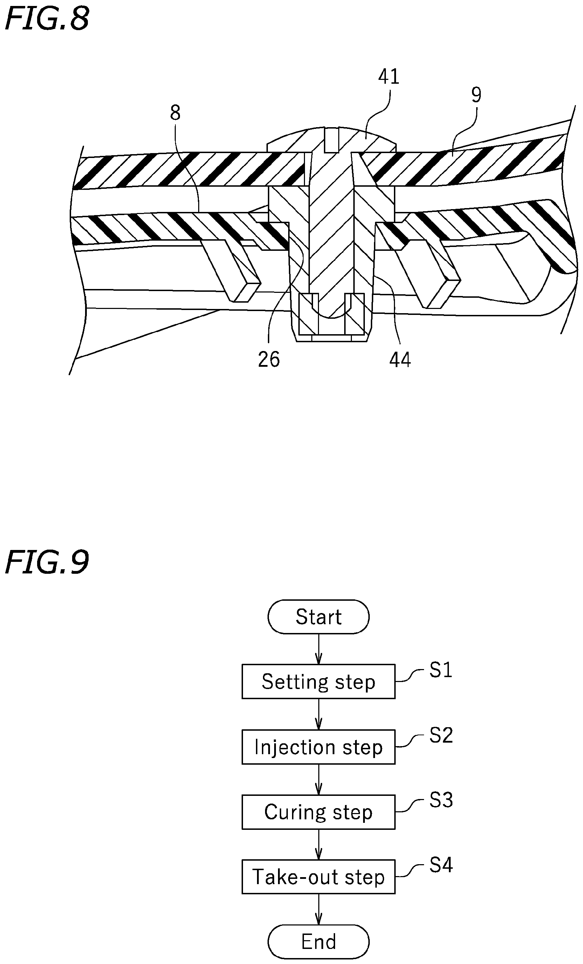

FIG. **8** is a cross-sectional view taken along line VIII-VIII of FIG. **3****.** A well nut **44** is inserted into the fastening hole **26** of the front cowl **8.** The screw **41** is fastened to the well nut **44.** The windscreen **9** is fastened to the screw **41** and the well nut **44.** The windscreen **9** is attached to the front cowl **8** by the screw **41** and the well nut **44.** Although not shown in the figures, another well nut **44** is inserted into the fastening hole **27** of the front cowl **8,** and another screw **41** is fastened to the other well nut **44.** The windscreen **9** is attached to the front cowl **8** also by the other screw **41** and the other well nut **44** (see FIG. **3****).**

The front cowl **8** is manufactured by insert molding. The front cowl **8** is manufactured, for example, by injecting a heated molten resin material around the reinforcement plate **30** set in an injection mold, and curing the resin material. FIG. **9** is a flow chart showing an example of a method for manufacturing the front cowl **8.**

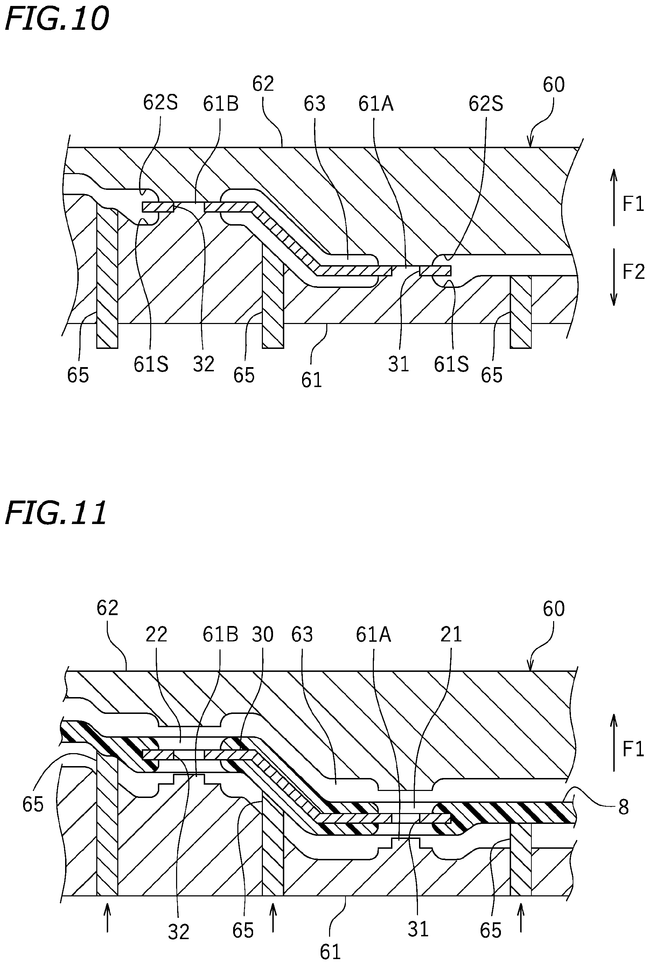

FIG. **10** is a partial cross-sectional view of an example of a mold **60.** The mold **60** includes a first mold **61** and a second mold **62.** In the description below, the direction of the arrow **F1** of FIG. **10** will be referred to as the first direction, and the direction of the arrow **F2** as the second direction. The second direction **F2** is the opposite direction to the first direction **F1.** The first mold **61** includes a first protrusion **61A** and a second protrusion **61B** protruding in the first direction **F1.** Although not shown in the figures, the first mold **61** includes a third protrusion and a fourth protrusion protruding in the first direction **F1.** Ejector pins **65** are inserted into the first mold **61.** The ejector pins **65** extend in the first direction **F1.** The ejector pins **65** can slide against the first mold **61** in the first direction **F1.** The ejector pins **65** are inserted into the first mold **61** so that the ejector pins **65** can slide in the first direction **F1.**

Next, referring to FIG. **9** to FIG. **11****,** an example of a method for manufacturing the front cowl **8** will be described.

First, a setting step of setting the reinforcement plate **30** in a space **63** between the first mold **61** and the second mold **62** is performed (step S 1). In this setting step S1, the first protrusion **61A** of the first mold **61** is fitted into the first through hole **31** of the reinforcement plate **30,** the second protrusion **61B** of the first mold **61** is fitted into the second through hole **32** of the reinforcement plate **30.** Thus, the reinforcement plate **30** is held by the first protrusion **61A** and the second protrusion **61B.** Although not shown in the figures, the third protrusion of the first mold **61** is fitted into the third through hole **33** of the reinforcement plate **30,** and the fourth protrusion of the first mold **61** is fitted into the fourth through hole **34** of the reinforcement plate **30.** Thus, the reinforcement plate **30** is held also by the third protrusion and the fourth protrusion. The front surface **30A** and the reverse surface **30B** of at least a portion of the reinforcement plate **30** are spaced apart from a surface **61S** of the first mold **61** and a surface **62S** of the second mold **62.** Therefore, in the injection step to be described below, it is possible to supply a resin material to both of the front surface **30A** and the reverse surface **30B** of the reinforcement plate **30.**

According to the present embodiment, in the setting step S1, at least the position of the first through hole **31** is aligned with the position of the first protrusion **61A,** and the position of the second through hole **32** is aligned with the position of the second protrusion **61B.** Therefore, it is possible to place the reinforcement plate **30** at an accurate position relative to the first mold **61** and the second mold **62.**

Next, a resin material is injected into the space **63** between the first mold **61** and the second mold **62** (step S2). That is, the injection step is performed. According to the present embodiment, at least the first protrusion **61A** and the second protrusion **61B** of the first mold **61** are engaged with the first through hole **31** and the second through hole **32** of the reinforcement plate **30,** respectively. Therefore, when a resin material is injected, the position of the reinforcement plate **30** is unlikely to shift. It is possible to prevent the position of the reinforcement plate **30** in the mold **60** from shifting.

Now, if the second through hole **32,** the third through hole **33** and the fourth through hole **34** of the reinforcement plate **30** are absent and the second protrusion **61B,** the third protrusion and the fourth protrusion of the first mold **61** are absent, then, the reinforcement plate **30** can rotate about the first protrusion **61A.** However, according to the present embodiment, through holes other than the first through hole **31** (e.g., the second through hole **32)** are formed in the reinforcement plate **30,** and the first mold **61** includes protrusions other than the first protrusion **61A** (e.g., the second protrusion **61B).** For reasons such as the engagement of the second through hole **32** with the second protrusion **61B,** the reinforcement plate **30** cannot rotate about the first protrusion **61A.** Therefore, it is possible to prevent the reinforcement plate **30** from rotating when a resin material is injected. This also prevents the position of the reinforcement plate **30** in the mold **60** from shifting.

Next, the mold **60** is cooled to cure the resin material (step S3). That is, the curing step is performed.

Next, in order to open the mold **60,** the second mold **62** is moved in the first direction **F1,** which is the direction away from the first mold **61.** Then, the cured resin material with the reinforcement plate **30** embedded therein (i.e., the front cowl **8**) is taken out of the first mold **61** and the second mold **62** (step S4). That is, the take-out step is performed. In this process, the resin material can desirably be pushed in the first direction **F1** by the ejector pins **65** (see FIG. **11**)**.** Thus, it is possible to easily take out the resin material with the reinforcement plate **30** embedded therein.

Note that in order to open the mold **60,** the second mold **62** can be moved in the first direction **F1** relative to the first mold **61.** Instead of moving the second mold **62** in the first direction **F1,** the first mold **61** may be moved in the second direction **F2**. The second mold **62** may be moved in the first direction **F1** as well as moving the first mold **61** in the second direction **F2**.

In the present embodiment, the direction in which the ejector pins **65** extend and the direction in which the first protrusion **61A** and the second protrusion **61B** of the first mold **61** extend are both the first direction **F1.** When moving the second mold **62** in the first direction **F1** relative to the first mold **61,** it is possible to smoothly push the resin material by the ejector pins **65.**

The front cowl **8** can be manufactured as described above.

With the front cowl **8** according to the present embodiment, although the body **20** is made of resin, the reinforcement plate **30** is embedded in the body **20,** and it is therefore possible to increase the rigidity. Since at least the first portion **51** and the second portion **52** of the body **20** cover both the front surface **30A** and the reverse surface **30B** of at least a portion of the reinforcement plate **30,** the reinforcement plate **30** is unlikely to peel off the body **20.**

According to the present embodiment, when manufacturing the front cowl **8,** the first protrusion **61A** of the first mold **61** is fitted into the first through hole **31** of the reinforcement plate **30,** and the second protrusion **61B** is fitted into the second through hole **32.** Thus, the reinforcement plate **30** can be set in the mold **60** so that the front surface **30A** and the reverse surface **30B** are spaced apart from the surface **61S** of the first mold **61** and the surface **62S** of the second mold **62.** Since the positions of the first through hole **31** and the second through hole **32** are aligned with the positions of the first protrusion **61A** and the second protrusion **61B,** respectively, it is possible to accurately position the reinforcement plate **30** with the mold **60.** Since the first protrusion **61A** and the second protrusion **61B** engage with the first through hole **31** and the second through hole **32,** when a resin material is injected into the mold **60,** the position of the reinforcement plate **30** is unlikely to shift. Therefore, the position of the reinforcement plate **30** is unlikely to shift relative to the body **20.** Particularly, the reinforcement plate **30** according to the present embodiment has a relatively elongated shape, but even with the reinforcement plate **30** of such a shape, the position thereof is unlikely to occur. With the front cowl **8** according to the present embodiment, since the position of the reinforcement plate **30** is unlikely to shift, and there will be little error from the design value of the rigidity.

The reinforcement plate **30** includes the first exposed portion **31A** around the first through hole **31,** the second exposed portion **32A** around the second through hole **32,** the third exposed portion **33A** around the third through hole **33,** and the fourth exposed portion **34A** around the fourth through hole **34.** The head of the bolt **42** and the boss **13** can be pressed against the first exposed portion **31A,** the second exposed portion **32A,** the third exposed portion **33A** and the fourth exposed portion **34A** (see FIG. **7****).** The first through hole **31,** the second through hole **32,** the third through hole **33** and the fourth through hole **34** can be used desirably not only as holes for preventing the position of the reinforcement plate **30** from shifting during the manufacture, but also as holes for fastening the front cowl **8** to the bracket **12** by the bolts **42.** Since the reinforcement plate **30** serves not only as a member for increasing the rigidity, but also as a fastening member, it is possible to reduce the number of components and the cost.

According to the present embodiment, the first hole **21,** the second hole **22,** the third hole **23** and the fourth hole **24** of the body **20** are formed inside the groove **25.** A portion around the first hole **21** is depressed in the center line direction of the first through hole **31** (see FIG. **7****).** A portion around the second hole **22** is depressed in the center line direction of the second through hole **32.** A portion around the third hole **23** is depressed in the center line direction of the third through hole **33.** A portion around the fourth hole **24** is depressed in the center line direction of the fourth through hole **34.** Thus, it is possible to increase the rigidity of the portion of the body **20** around the first hole **21,** the portion around the second hole **22,** the portion around the third hole **23** and the portion around the fourth hole **24.**

While one embodiment has been described above, the aforementioned embodiment is merely an example. Various other embodiments are possible. Next, examples of other embodiments will be described.

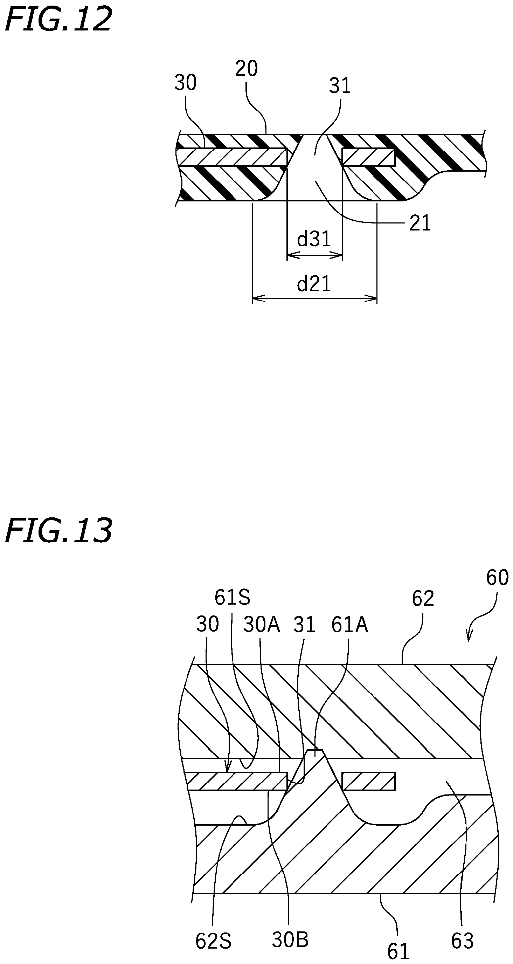

In the embodiment described above, the reinforcement plate **30** includes the first exposed portion **31A** around the first through hole **31.** The first through hole **31** is used as a hole for fastening the front cowl **8** to the bracket **12** by the bolt **42.** However, the first through hole **31** does not need to be used as a hole for fastening. As shown in FIG. **12****,** the reinforcement plate **30** does not need to include the first exposed portion **31A** around the first through hole **31.** The first hole **21** of the body **20** may be a hole having a constant inner diameter, or may be shaped so that the inner diameter decreases gradually from one of the front side and the reverse side to the other. In this case, the inner diameter **d21** of the first hole **21** refers to the larger one of the inner diameter at the opening on the front side and the inner diameter at the opening on the reverse side. The inner diameter **d31** of the first through hole **31** is less than or equal to the inner diameter **d21** of the first hole **21.**

As shown in FIG. **13****,** even with the front cowl **8** in which the reinforcement plate **30** does not have the first exposed portion **31A,** the first protrusion **61A** of the first mold **61** can be fitted into the first through hole **31** during the manufacture, thereby allowing the reinforcement plate **30** to be set with the front surface **30A** and the reverse surface **30B** spaced apart from the surface **61S** of the first mold **61** and the surface **62S** of the second mold **62.** When a resin material is injected into the space **63** in the mold **60,** it is possible to prevent the position of the reinforcement plate **30** from shifting. Therefore, since the position of the reinforcement plate **30** is unlikely to shift, there will be little error from the design value of the rigidity of the front cowl **8.** Note that this similarly applies to the second through hole **32,** the third through hole **33** and the fourth through hole **34.** One or two or more of the second exposed portion **32A,** the third exposed portion **33A** and the fourth exposed portion **34A** may be optional.

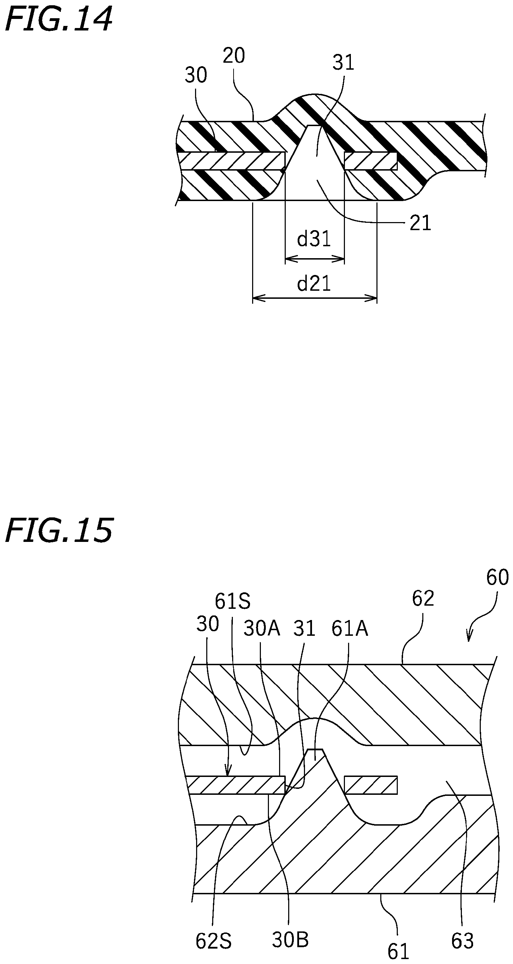

In the embodiment described above, the first hole **21** of the body **20** is a through hole. However, the first hole **21** may be a non-through hole as shown in FIG. **14****.** That is, the first hole **21** may be a depression. The inner diameter **d31** of the first through hole **31** is less than or equal to the inner diameter **d21** of the first hole **21.**

As shown in FIG. **15****,** even with the front cowl **8** in which the first hole **21** is a non-through hole, the first protrusion **61A** of the first mold **61** can be fitted into the first through hole **31** during the manufacture, thereby allowing the reinforcement plate **30** to be set with the front surface **30A** and the reverse surface **30B** spaced apart from the surface **61S** of the first mold **61** and the surface **62S** of the second mold **62.** When a resin material is injected into the space **63** in the mold **60,** it is possible to prevent the position of the reinforcement plate **30** from shifting. Therefore, since the position of the reinforcement plate **30** is unlikely to shift, there will be little error from the design value of the rigidity of the front cowl **8.** Note that this similarly applies to the second hole **22,** the third hole **23** and the fourth hole **24.** One or two or more of the second hole **22,** the third hole **23** and the fourth hole **24** may be a non-through hole.

The vehicle exterior part made primarily of resin is not limited to the front cowl **8.** The vehicle exterior part made primarily of resin may be the rear fender **16** (see FIG. **1**) or the side cover **17.** The present invention is applicable to any vehicle exterior part of a straddled vehicle.

A straddled vehicle refers to a vehicle that is straddled by the rider. The straddled vehicle is not limited to the motorcycle **1.** The straddled vehicle may be an auto tricycle, an ATV (All Terrain Vehicle), or a snowmobile, for example.

## Claims

1. A straddled vehicle **(1)** comprising a vehicle exterior part **(8),** the vehicle exterior part **(8)** comprising:
a resin-made body **(20);** and
a reinforcement plate **(30)** that has a front surface **(30A)** and a reverse surface **(30B),** wherein:
the body **(20)** is formed with a first hole **(21)** and a second hole **(22);**
the reinforcement plate **(30)** is formed with a first through hole **(31)** aligned with the first hole **(21)** and a second through hole **(32)** aligned with the second hole **(22);**
an inner diameter **(d31)** of the first through hole **(31)** is less than or equal to an inner diameter **(d21)** of the first hole **(21),** and an inner diameter of the second through hole **(32)** is less than or equal to an inner diameter of the second hole **(22);** and
the body **(20)** includes a first portion **(51)** that covers the front surface **(30A)** and the reverse surface **(30B)** of the reinforcement plate **(30)** around the first through hole **(31),** and a second portion **(52)** that covers the front surface **(30A)** and the reverse surface **(30B)** of the reinforcement plate **(30)** around the second through hole **(32);**
wherein said reinforcement plate (30) is at least partially embedded in the body **(20);**
**characterized in that** a portion of the body **(20)** around the first hole **(21)** is depressed in a center line direction of the first through hole **(31);** and/or
a portion of the body **(20)** around the second hole **(22)** is depressed in a center line direction of the second through hole **(32).**

2. The straddled vehicle **(1)** according to claim 1, wherein:
an inner diameter **(d31)** of the first through hole **(31)** is smaller than an inner diameter **(d21)** of the first hole **(21),** and an inner diameter of the second through hole **(32)** is smaller than an inner diameter of the second hole **(22);**
the reinforcement plate **(30)** includes a first exposed portion **(31A)** that is a portion around the first through hole **(31)** and is not covered by the body **(20),** and a second exposed portion **(32A)** that is a portion around the second through hole **(32)** and is not covered by the body **(20);**
the first portion **(51)** of the body **(20)** covers the front surface **(30A)** and the reverse surface **(30B)** of the reinforcement plate **(30)** around the first exposed portion **(31A);** and
the second portion **(52)** of the body **(20)** covers the front surface **(30A)** and the reverse surface **(30B)** of the reinforcement plate **(30)** around the second exposed portion **(32A).**

3. The straddled vehicle **(1)** according to claim 1 or 2, wherein the first hole **(21)** and/or the second hole **(22)** is a through hole.

4. The straddled vehicle **(1)** according to any one of claims 1 to 3, wherein the first through hole **(31)** and/or the second through hole **(32)** has a circular shape.

5. The straddled vehicle **(1)** according to any one of claims 1 to 4, wherein the reinforcement plate **(30)** is formed of metal.

6. The straddled vehicle **(1)** according to any one of claims 1 to 5, comprising:
a vehicle frame **(2)** including a head pipe **(2A);** and
a bracket **(12)** supported on the vehicle frame **(2),** wherein:
the vehicle exterior part **(8)** is a front cowl that is arranged at least partially forward of the head pipe **(2A);**
the front cowl is fastened to the bracket **(12)** by a bolt **(42)** inserted through the first through hole **(31)** and a bolt **(42)** inserted through the second through hole **(32);**
a windscreen **(9)** is attached to the front cowl.

## Patentansprüche

1. Spreizsitz-Fahrzeug (1), das einen Fahrzeug-Außenteil (8) umfasst, wobei der Fahrzeug-Außenteil (8) umfasst:
einen aus Kunststoff bestehenden Körper (20); sowie
eine Verstärkungsplatte (30), die eine Vorderseite (30A) sowie eine Rückseite (30B) aufweist, wobei:
der Körper (20) mit einem ersten Loch (21) und einem zweiten Loch (22) versehen ist;
die Verstärkungsplatte (30) mit einem ersten Durchgangsloch (31), das auf das erste Loch (21) ausgerichtet ist, sowie einem zweiten Durchgangsloch (32) versehen ist, das auf das zweite Loch (22) ausgerichtet ist;
ein Innendurchmesser (d31) des ersten Durchgangslochs (31) kleiner als oder genauso groß ist wie ein Innendurchmesser (d21) des ersten Lochs (21) und ein Innendurchmesser des zweiten Durchgangslochs (32) kleiner ist als oder genauso groß wie ein Innendurchmesser des zweiten Lochs (22); und
der Körper (20) einen ersten Abschnitt (51), der die Vorderseite (30A) und die Rückseite(30B) der Verstärkungsplatte (30) um das erste Durchgangsloch (31) herum abdeckt, sowie einen zweiten Abschnitt (52) enthält, der die Vorderseite (30A) und die Rückseite (30B) der Verstärkungsplatte (30) um das zweite Durchgangsloch (32) herum abdeckt;
wobei die Verstärkungsplatte (30) wenigstens teilweise in dem Körper (20) eingebettet ist;
**dadurch gekennzeichnet, dass**
ein Abschnitt des Körpers (20) um das erste Loch (21) herum in einer Richtung der Mittellinie des ersten Durchgangslochs (31) vertieft ist; und/oder
ein Abschnitt des Körpers (20) um das zweite Loch (22) herum in einer Richtung der Mittellinie des zweiten Durchgangslochs (32) vertieft ist.

2. Spreizsitz-Fahrzeug (1) nach Anspruch 1, wobei:
ein Innendurchmesser (d31) des ersten Durchgangslochs (31) kleiner ist als ein Innendurchmesser (d21) des ersten Lochs (21) und ein Innendurchmesser des zweiten Durchgangslochs (32) kleiner ist als ein Innendurchmesser des zweiten Lochs (22);
die Verstärkungsplatte (30) einen ersten freiliegenden Abschnitt (31A), der ein Abschnitt um das erste Durchgangsloch (31) herum ist und von dem Körper (20) nicht abgedeckt wird, sowie einen zweiten freiliegenden Abschnitt (32A) enthält, der ein Abschnitt um das zweite Durchgangsloch (32) herum ist und von dem Körper (20) nicht abgedeckt wird;
der erste Abschnitt (51) des Körpers (20) die Vorderseite (30A) sowie die Rückseite (30B) der Verstärkungsplatte (30) um den ersten freiliegenden Abschnitt (31A) herum abdeckt; und
der zweite Abschnitt (52) des Körpers (20) die Vorderseite (30A) sowie die Rückseite (30B) der Verstärkungsplatte (30) um den zweiten freiliegenden Abschnitt (32A) herum abdeckt.

3. Spreizsitz-Fahrzeug (1) nach Anspruch 1 oder 2, wobei das erste Loch (21) und/oder das zweite Loch (22) ein Durchgangsloch sind/ist.

4. Spreizsitz-Fahrzeug (1) nach einem der Ansprüche 1 bis 3, wobei das erste Durchgangsloch (31) und/oder das zweite Durchgangsloch (32) eine Kreisform haben/hat.

5. Spreizsitz-Fahrzeug (1) nach einem der Ansprüche 1 bis 4, wobei die Verstärkungsplatte (30) aus Metall besteht.

6. Spreizsitz-Fahrzeug (1) nach einem der Ansprüche 1 bis 5, das umfasst:
einen Fahrzeugrahmen (2), der ein Steuerrohr (2A) enthält; sowie
eine Halterung (12), die von dem Fahrzeugrahmen (2) getragen wird, wobei:
der Fahrzeug-Außenteil (8) eine Frontverkleidung ist, die wenigstens teilweise vor dem Steuerrohr (2A) angeordnet ist;
die Frontverkleidung an der Halterung (12) mittels eines Bolzens (42), der über das erste Durchgangsloch (31) hindurch eingeführt ist, sowie mittels eines Bolzens (42) befestigt ist, der über das zweite Durchgangsloch (32) hindurch eingeführt ist;
eine Windschutzscheibe (9) an der Frontverkleidung angebracht ist.

## Revendications

1. Véhicule à selle (1) comprenant une partie extérieure de véhicule (8), la partie extérieure de véhicule (8) comprenant :
un corps constitué de résine (20) ; et
une plaque de renforcement (30) qui présente une surface avant (30A) et une surface inverse (30B), dans lequel :
le corps (20) est constitué d'un premier trou (21) et d'un deuxième trou (22) ;
la plaque de renforcement (30) est constituée d'un premier trou traversant (31) aligné sur le premier trou (21) et d'un deuxième trou traversant (32) aligné sur le deuxième trou (22) ;
un diamètre intérieur (d31) du premier trou traversant (31) est inférieur ou égal à un diamètre intérieur (d21) du premier trou (21), et un diamètre intérieur du deuxième trou traversant (32) est inférieur ou égal à un diamètre intérieur du deuxième trou (22) ; et
le corps (20) inclut une première partie (51) qui couvre la surface avant (30A) et la surface inverse (30B) de la plaque de renforcement (30) autour du premier trou traversant (31), et une deuxième partie (52) qui couvre la surface avant (30A) et la surface inverse (30B) de la plaque de renforcement (30) autour du deuxième trou traversant (32) ;
dans lequel
ladite plaque de renforcement (30) est au moins partiellement incorporée dans le corps (20) ;
**caractérisé en ce que**
une partie du corps (20) autour du premier trou (21) est enfoncée dans une direction de ligne centrale du premier trou traversant (31) ; et/ou
une partie du corps (20) autour du deuxième trou (22) est enfoncée dans une direction de ligne centrale du deuxième trou traversant (32).

2. Le véhicule à selle (1) selon la revendication 1, dans lequel :
un diamètre intérieur (d31) du premier trou traversant (31) est plus petit qu'un diamètre intérieur (d21) du premier trou (21), et un diamètre intérieur du deuxième trou traversant (32) est plus petit qu'un diamètre intérieur du deuxième trou (22) ;
la plaque de renforcement (30) inclut une première partie exposée (31A) qui est une partie autour du premier trou traversant (31) et n'est pas couverte par le corps (20), et une deuxième partie exposée (32A) qui est une partie autour du deuxième trou traversant (32) et n'est pas couverte par le corps (20) ;
la première partie (51) du corps (20) couvre la surface avant (30A) et la surface inverse (30B) de la plaque de renforcement (30) autour de la première partie exposée (31A) ; et
la deuxième partie (52) du corps (20) couvre la surface avant (30A) et la surface inverse (30B) de la plaque de renforcement (30) autour de la deuxième partie exposée (32A) .

3. Le véhicule à selle (1) selon la revendication 1 ou 2, dans lequel le premier trou (21) et/ou le deuxième trou (22) est un trou traversant.

4. Le véhicule à selle (1) selon l'une quelconque des revendications 1 à 3, dans lequel le premier trou traversant (31) et/ou le deuxième trou traversant (32) présentent une forme circulaire.

5. Le véhicule à selle (1) selon l'une quelconque des revendications 1 à 4, dans lequel la plaque de renforcement (30) est constituée de métal.

6. Le véhicule à selle (1) selon l'une quelconque des revendications 1 à 5, comprenant :
un cadre de véhicule (2) incluant une tête de fourche (2A) ; et
un support (12) soutenu sur le cadre de véhicule (2), dans lequel :
la partie extérieure de véhicule (8) est un carénage avant qui est disposé au moins partiellement en avant de la tête de fourche (2A) ;
le carénage avant est fixé au support (12) par un boulon (42) inséré à travers le premier trou traversant (31) et un boulon (42) inséré à travers le deuxième trou traversant (32) ;
un pare-brise (9) est fixé au carénage avant.
